# EUROPÄISCHE PATENTSCHRIFT

(11) **EP 4 176 702 B1**
(45) Veröffentlichungstag und Bekanntmachung des Hinweises auf die Patenterteilung: **17.12.2025**
(21) Anmeldenummer: 22401029.8
(22) Anmeldetag: 24.10.2022
(51) Int. Cl.: A01B 79/00, A01M 7/00, A01M 9/00

(54) **VERFAHREN ZUM STEUERN UND/ODER REGELN EINER LANDWIRTSCHAFTLICHEN VERTEILMASCHINE**
METHOD FOR CONTROLLING AND/OR REGULATING AN AGRICULTURAL DISTRIBUTION MACHINE
PROCÉDÉ DE COMMANDE ET/OU DE RÉGLAGE D'UNE MACHINE DE DISTRIBUTION AGRICOLE

(30) Priorität: 05.11.2021 DE 102021128781
(43) Veröffentlichungstag der Anmeldung: 10.05.2023
(73) Patentinhaber: Amazonen-Werke H. Dreyer SE & Co. KG, 49205 Hasbergen (DE)
(72) Erfinder: Kötter, Heiner, 49086 Osnabrück (DE); Kühn, Christoph, 49186 Bad Iburg (DE); Bensmann, Gregor, 48268 Greven (DE)

(56) Entgegenhaltungen:
- EP-A1- 3 895 531
- WO-A1-00/23937
- WO-A1-2012/142396
- US-A1- 2020 281 110
- US-B1- 6 216 614

## Beschreibung

Die Erfindung betrifft ein Verfahren zum Steuern und/oder Regeln einer landwirtschaftlichen Verteilmaschine gemäß dem Oberbegriff des Patentanspruches 1.

Auf dem Gebiet der Landwirtschaft sind eine Vielzahl von Varianten gezogener, angebauter und/oder selbstfahrender Arbeitsmaschinen bekannt. Hierzu zählen unter anderem Verteilmaschinen, welche dazu eingerichtet sind, Verteilgut über Verteilorgane auf einer landwirtschaftlichen Nutzfläche zu applizieren bzw. auszubringen. Derartige Verteilmaschinen können beispielsweise als Sämaschine zum Applizieren bzw. Ausbringen und/oder Ablegen von granularem Material, insbesondere Saatgut und/oder Dünger, oder als Feldspritze zum Applizieren einer Spritzflüssigkeit ausgebildet sein. Gattungsgemäße Spritzflüssigkeiten können dabei je nach Bedarf als Düngemittel, Pflanzenschutzmittel, Schädlingsbekämpfungsmittel und/oder als Unkrautbekämpfungsmittel ausgeführt und zum Aufbringen auf einer Nutzpflanze und/oder auf Wildbewuchs, insbesondere Unkraut, vorgesehen sein.

Moderne landwirtschaftliche Verteilmaschinen werden in der heutigen Praxis überwiegend automatisiert und anhand satelliten-basierender Positionsinformationen der Verteilmaschine und/oder der Nutzfläche betrieben. Hierbei ist es üblich, dass die Verteilorgane derartiger Verteilmaschinen zum Applizieren des Verteilguts anhand bereitgestellter, abrufbarer und/oder erfassbarer Informationen und/oder Daten gesteuert und/oder geregelt werden. Um derartige Verteilmaschinen möglichst effizient und/oder einfach betreiben zu können, haben sich unter anderem sogenannte Teilbreitenschaltungen durchgesetzt, bei welchen die Verteilorgane gruppenweise steuer- und/oder regelbar, insbesondere aktivierbar und/oder deaktivierbar, sind. Die Vielzahl der üblicherweise an einem Gestänge angeordneten Verteilorgane sind dabei in unterschiedliche Teilbreiten entlang des Gestänges unterteilt. Anhand der Positionsinformationen zur Verteilmaschine und/oder der Nutzfläche und bereitgestellter Informationen zur Konfiguration der Verteilmaschine, erkennt das der Verteilmaschine zugeordnete Steuer- und/oder Regelsystem beispielsweise welche Teilbreiten, insbesondere Verteilorgane, sich während der Applikation oberhalb bereits applizierter Bereiche oder außerhalb äußerer Feldgrenzen der zu behandelnden und/oder zu bearbeitenden Nutzfläche befinden. Das Steuer- und/oder Regelsystem ist dabei ferner dazu eingerichtet, die Teilbreiten, insbesondere Verteilorgane, mit besonders hoher Präzision, insbesondere düsenweise und/oder mittels verteilgutmengenunabhängiger Schaltbefehle, derart zu steuern und/oder zu regeln bzw. zu aktivieren und/oder zu deaktivieren, dass eine Applikation des Verteilguts auf bereits applizierte Bereiche und/oder außerhalb der äußeren Feldgrenze und damit außerhalb der Nutzfläche zumindest nahezu ausgeschlossen ist. Eine derartige landwirtschaftliche Verteilmaschine ist beispielsweise in der Druckschrift US 6 216 614 B1 beschrieben.

Aus den Druckschriften WO 2012/142396 A1 oder WO 00/23937 A1 sind ferner Verteilmaschinen und/oder Verfahren bekannt geworden, die außerdem dazu geeignet sind, das Verteilgut bedarfsgerecht, insbesondere ortsbasiert und/oder teilflächenspezifisch, anhand von bereitgestellten Applikationskarten auf der Nutzfläche zu applizieren. Hierbei beinhalten derartige Applikationskarten wenigstens einen ersten elektronischen Datensatz, in welchem die bedarfsgerechten, insbesondere ortsbasierten und/oder teilflächenspezifischen, Verteilgutmengen hinterlegt sind. Der erste Datensatz, insbesondere die Applikationskarte, wird dabei üblicherweise von einem Betreiber der Verteilmaschine oder einem externen Dienstleister generiert und/oder bereitgestellt. Anschließend wird der erste Datensatz, insbesondere die Applikationskarte, vor und/oder während der Applikation von einer zentralen und/oder mobilen Rechnereinheit eingelesen und/oder abgerufen. Die bedarfsgerechten, insbesondere benötigten, Verteilgutmengen können dabei je nach Bedarf und/oder Anwendungsart teilflächenspezifisch und/oder punktuell aufgelöst bzw. hinterlegt sein. Bei gattungsgemäßen Verteilmaschinen und/oder Verfahren ist dabei vorgesehen, dass derartig hinterlegte Verteilgutmengen von einem der Verteilmaschine zugeordneten Steuer- und/oder Regelsystem entsprechend verarbeitet und/oder an den jeweiligen Verteilorganen der Verteilmaschine eingestellt werden.

Eine derartiges Verfahren ist außerdem in der Druckschrift US 2020/281110 A1 offenbart.

Bei den beschriebenen Verteilmaschinen und/oder Verfahren können die entlang einer aktuellen Arbeitsbreite der Verteilmaschine einstellbaren Verteilgutmengen bisher jedoch nicht der verhältnismäßig hohen Auflösung bzw. Anzahl der auf dem ersten Datensatz, insbesondere der Applikationskarte, hinterlegten und/oder abrufbaren unterschiedlichen Verteilgutmengen gerecht werden. Im Regelfall übersteigt die Anzahl der auf dem ersten Datensatz hinterlegten Verteilgutmengen die maximale Variation und/oder Spreizung der entlang einer aktuellen Arbeitsbreite der Verteilmaschine einstellbaren und/oder applizierbaren Verteilgutmengen. Mit anderen Worten, weisen bisherige landwirtschaftliche Verteilmaschinen in der Regel nur eine begrenzte Anzahl von Sollwert-Empfängern, insbesondere Steuergeräten, zum Verarbeiten und/oder Empfangen von unterschiedlichen Einstellparametern, insbesondere einzustellender Verteilgutmengen, auf. Somit wird das Verteilgut in vielen Situationen innerhalb der feldinneren bzw. feldinternen Bereiche und/oder entlang der aktuellen Arbeitsbreite mit einer von der vorgesehenen abweichenden Verteilgutmenge appliziert. Besonders problematisch sind dabei Punkte und/oder Teilflächen entlang der Nutzfläche, für die eigentlich überhaupt gar kein oder zumindest nahezu kein Verteilgut vorgesehen ist, welche jedoch innerhalb einer aktuellen Arbeitsbreite der Verteilmaschine liegen, bei welcher an anderer Stelle entlang der Arbeitsbreite Verteilgut weiterhin appliziert werden soll.

Dem gegenüber kann das Steuer- und/oder Regelsystem, insbesondere unabhängig von den Sollwert-Empfängern, anhand der sogenannten Teilbreitenschaltung, insbesondere der verteilgutmengenunabhängigen Schaltbefehle, eine höhere Anzahl oder zumindest nahezu jede Teilbreite, insbesondere jedes Verteilorgan, ansteuern bzw. aktivieren und/oder deaktivieren. Somit kann mittels der Teilbreitenschaltung, insbesondere der verteilgutmengenunabhängigen Schaltbefehle, zwar zumindest nahezu jede Teilbreite oder jedes Verteilorgan zu- und/oder abgeschaltet werden, nicht jedoch deren einzelne Ausbringmenge gesteuert und/oder variiert werden. Des Weiteren ist es bisher auch nicht möglich die einzelnen Teilbreiten, insbesondere Verteilorgane, anhand des ersten Datensatzes, insbesondere der Applikationskarte, bzw. der darin hinterlegten Verteilgutmengen anzusteuern bzw. zu aktivieren und/oder zu deaktivieren.

In einer Vielzahl von Situationen könnte das Applikationsergebnis jedoch weiter verbessert werden, wenn die auf dem ersten Datensatz, insbesondere der Applikationskarte, basierenden Informationen zusätzlich auch für die Teilbreitenschaltung, insbesondere die verteilgutmengenunabhängige, Steuerung und/oder Regelung nutzbar wäre. Die der Erfindung zugrunde liegende Aufgabe besteht somit darin, ein Verfahren bereitzustellen, welches die Applikationsgenauigkeit und damit die Effizienz und/oder Erträge bisheriger Verteilmaschinen und/oder Verfahren in besonders einfacher Weise noch weiter verbessert.

Diese Aufgabe wird erfindungsgemäß durch die Merkmale des Anspruchs 1 gelöst.

Die Erfindung macht sich die Erkenntnis zunutze, dass der wenigstens eine erste Datensatz einer Applikationskarte sämtliche Informationen umfasst, welche zur Generierung wenigstens eines zweiten Datensatzes zum Betreiben der Verteilmaschine, insbesondere zum Aktivieren bzw. Deaktivieren von Verteilorganen, erforderlich sind. Vorzugsweise werden durch die Umwandlung des ersten Datensatzes, feldinnere Applikationsbereiche entlang der, insbesondere elektronisch abgebildeten, Nutzfläche generiert, innerhalb denen das Verteilgut durch die Verteilmaschine appliziert werden soll. Mit anderen Worten wird dabei vorzugsweise eine Art invertierte Feldgrenzenkarte zum Steuern- und/oder Regeln, insbesondere Aktivieren bzw. Deaktivieren der Verteilorgane, generiert und/oder simuliert, dessen Feldgrenzen anstatt um die tatsächliche, insbesondere äußere, Feldgrenze der Nutzfläche, sich um die einzelnen zu applizierenden Applikationsbereich auf der Nutzfläche erstrecken. Dadurch werden, insbesondere mittels der verteilgutmengenunabhängigen Teilbreitenschaltung, sämtliche Teilbreiten, insbesondere Verteilorgane, deaktiviert, die sich während der Applikation außerhalb derartiger Applikationsbereiche befinden. Dies hat den Vorteil, dass eine Ausbringung bzw.

Applikation auf Bereichen, auf denen gemäß des ersten Datensatzes bzw. der Applikationskarte, kein Verteilgut vorgesehen ist, zumindest nahezu ausgeschlossen ist.

Das Umwandeln des ersten Datensatzes und/oder das Generieren des zweiten Datensatzes kann bevorzugt zumindest teilweise auf der mobilen Rechnereinheit der Verteilmaschine und/oder der zentralen Rechnereinheit des Betreibers und/oder des Dienstleisters ausgeführt werden. Besonders bevorzugt kann das Umwandeln und/oder Generieren auch vollständig auf einem der Verteilmaschine zugeordneten Bedien- und/oder Anzeigemittel, insbesondere einem Bedienterminal, erfolgen.

In einer bevorzugten Ausführungsform des erfindungsgemäßen Verfahrens wird beim Umwandeln des ersten Datensatzes oder beim Generieren des zweiten Datensatzes ein Applikationsbereich, insbesondere von mehreren Applikationsbereichen, um zumindest einen ortsbasierten Punkt oder zumindest eine Teilfläche generiert und/oder simuliert, auf dem oder innerhalb der auf dem ersten Datensatz, insbesondere der Applikationskarte, eine Verteilgutmenge einen definierten Grenzwert überschreitet, insbesondere größer Null ist. Die Verteilgutmenge ist auf der Applikationskarte bevorzugt in einer flächenbezogenen oder zeitbezogenen Mengeneinheit, beispielsweise Liter pro Hektar oder Liter pro Minute oder dergleichen, hinterlegt und/oder von dieser abrufbar. Demnach werden Bereiche der Nutzfläche die den definierten Grenzwert unterschreiten, insbesondere eine hinterlegte und/oder abrufbare Verteilgutmenge gleich Null aufweisen, aus den Applikationsbereichen ausgeschlossen und sind somit für eine Applikation mit Verteilgut nicht vorgesehen. Alternativ oder zusätzlich werden hierbei verteilgutmengenunabhängige Schaltbefehle für die Verteilmaschine generiert, welche auf dem zweiten Datensatz, insbesondere den Applikationsbereichen, basieren. Die Schaltbefehle werden dabei vorzugsweise durch die zentrale Rechnereinheit generiert und/oder vorbereitet. Besonders bevorzugt können die Schaltbefehle auf der mobilen Rechnereinheit, insbesondere dem Bedien- und/oder Anzeigemittel nach Art eines Bedienterminals, der Verteilmaschine generiert werden. Die generierten Schaltbefehle beinhalten anstelle der Informationen und/oder Daten zum Anpassen von Einstellparametern wie beispielsweise Sollwerte bzw. Ausbringmengen der einzelnen Teilbreiten, insbesondere der Verteilorgane, vorzugsweise lediglich die Information zum Zu- und/oder Abschalten bzw. Aktivieren und/oder Deaktivieren der Teilbreiten, insbesondere der Verteilorgane, und können somit mit besonders geringer Übertragungsgröße innerhalb des Steuer- und/oder Regelsystems der Verteilmaschine übertragen werden. Mit anderen Worten werden die aus dem ersten Datensatz generierbaren Informationen und/oder Daten zu mengenunabhängigen Schaltbefehlen, insbesondere Aktivierungs- und/oder Deaktivierungsbefehlen der Teilbreiten oder Verteilorgane, konvertiert. Ferner können derartige Schaltbefehle von einer besonders großen Anzahl an Empfängern, insbesondere düsenweise, innerhalb der Verteilmaschine verarbeitet werden, die in der Regel die Anzahl an Sollwerte-Empfängern und/oder Einstelleinrichtungen des Fördersystems der Verteilmaschine zum Anpassen der Verteilgutmenge übersteigt.

Erfindungsgemäß bezeichnen die Begriffe "verteilgutmengenunabhängige Schaltbefehle" oder "verteilgutmengenunabhängige Teilbreitenschaltung" ein bloßes Zu- oder Abschalten bzw. Aktivieren oder Deaktivieren von Teilbreiten oder Verteilorganen. Bei derartigen Schaltbefehlen werden keine Parametrierungen und/oder Einstellungen hinsichtlich der Verteilgutmenge an den einzelnen Teilbreiten oder Verteilorganen vorgenommen.

In einer Weiterbildung des erfindungsgemäßen Verfahrens werden die Applikationsbereiche jeweils aus oder durch wenigstens einen Punkt, insbesondere eine georeferenzierte Koordinate, und wenigstens einer Größen- und/oder Ausdehnungsangabe, insbesondere einem Radius oder dergleichen, gebildet. Bevorzugt werden derartige Applikationsbereiche durch zumindest im Wesentlichen rundliche, insbesondere kreisförmige oder ovalförmige, Flächen abgebildet und/oder simuliert, deren Zentrum bzw. Mittelpunkt durch den wenigstens einen Punkt, insbesondere die Koordinate, gebildet wird. Der umgewandelte, insbesondere zweite, Datensatz benötigt somit zur Abbildung oder Simulation der Applikationsbereiche und damit zur Generierung der verteilgutmengenunabhängigen Schaltbefehle eine besonders geringe Daten- und/oder Übertragungsgröße und damit einen besonders geringen Aufwand für Auswerte- und/oder Rechenoperationen durch das Steuer- und/oder Regelsystem, insbesondere die Rechnereinheit.

Alternativ oder zusätzlich können die Applikationsbereich auch durch eine Vielzahl von Punkten im Bereich des Umfangs, insbesondere nach Art einer Punktwolke oder dergleichen, gebildet oder simuliert werden. Insbesondere ist auch vorgesehen, dass derartige Applikationsbereiche durch tabellarisch hinterlegte Informationen abgebildet werden.

In einer besonders bevorzugt Ausführungsform des erfindungsgemäßen Verfahrens werden die Applikationsbereiche jeweils auf wenigstens eine auf dem ersten Datensatz, insbesondere der Applikationskarte, hinterlegte Einzelpflanze oder einer Mehrzahl benachbarter Einzelpflanzen projiziert und/oder generiert. Die auf dem zweiten Datensatz hinterlegten Applikationsbereiche umschließen somit nur diejenigen Bereiche der Nutzfläche auf dem sich gemäß des ersten Datensatzes, insbesondere der Applikationskarte, Einzelpflanzen, insbesondere Nutzpflanzen und/oder Unkräuter, befinden. Ein derartig ausgeführter zweiter Datensatz ist für eine zumindest nahezu punktuelle Applikation des Verteilguts, insbesondere zur Einzelpflanzenbehandlung, besonders gut geeignet.

In einer anderen bevorzugten Ausführungsform des erfindungsgemäßen Verfahrens wird der zweite Datensatz auf einem der Verteilmaschine zugeordneten Steuer- und/oder Regelsystem, insbesondere einem mobilen Bedien- und/oder Anzeigemittel, abgerufen. Alternativ oder zusätzlich wird die Verteilmaschine, insbesondere wenigstens ein an der Verteilmaschine angeordnetes Verteilorgan, mittels des Steuer- und/oder Regelsystems anhand des zweiten Datensatzes, insbesondere der Applikationsbereiche und/oder der verteilgutmengenunabhängigen Schaltbefehle, gesteuert und/oder geregelt. Die jeweiligen Teilbreiten, insbesondere Verteilorgane, werden dabei besonders bevorzugt anhand der verteilgutmengenunabhängigen Schaltbefehle aktiviert bzw. deaktiviert, so dass das Verteilgut nur über die aktivierten Teilbreiten, insbesondere Verteilorgane, appliziert wird.

Die Verteilmaschine ist besonders bevorzugt als landwirtschaftliche Feldspritze ausgebildet, wobei die Verteilorgane vorzugsweise als Spritzdüsen und/oder Ventile ausgeführt sind.

Weitere Einzelheiten der Erfindung sind der Beispielsbeschreibung und den Zeichnungen zu entnehmen. Die Zeichnungen zeigen
- Fig.1: eine schematische Draufsicht einer landwirtschaftlichen Nutzfläche;
- Fig.2A: eine schematische Darstellung einer elektronischen Applikationskarte auf Basis der Nutzfläche aus Fig.1;
- Fig.2B: die Applikationskarte aus Fig.2A in einer weiteren schematischen Ansicht;
- Fig.3A: eine erste erfindungsgemäße Variante von abgegrenzten Applikationsbereichen in einer schematischen Ansicht;
- Fig.3B: eine zweite erfindungsgemäße Variante von abgegrenzten Applikationsbereichen in einer schematischen Ansicht; und
- Fig.4: eine schematische Darstellung eines Ablaufdiagramms des erfindungsgemäßen Verfahrens.

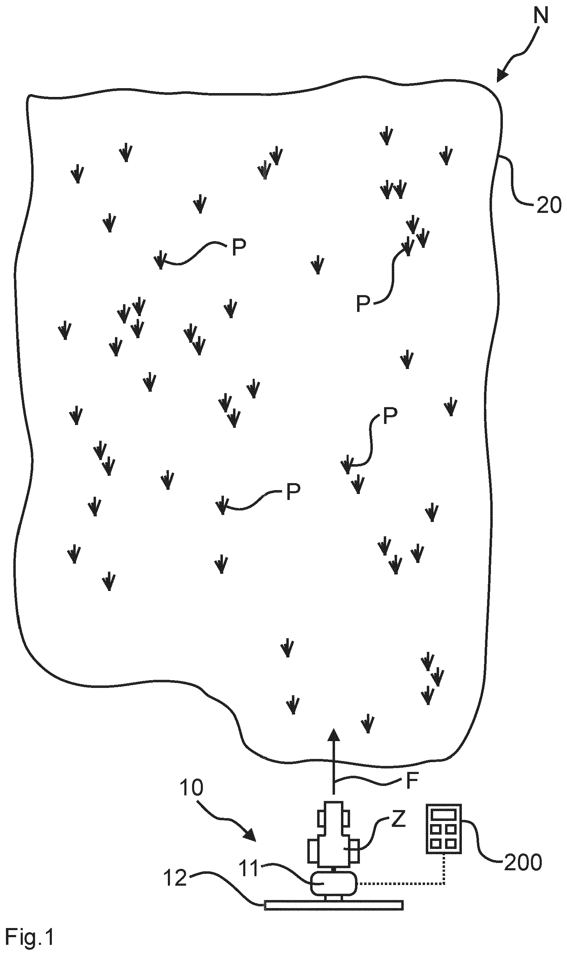

Eine beispielhafte landwirtschaftliche Nutzfläche N in einer schematischen Ansicht von Oben ist in der Fig.1 gezeigt. Eine derartige Ansicht der Nutzfläche N kann beispielsweise mittels sattelitengestützter Aufnahmen, einer Flugeinrichtung, insbesondere Drohne, und/oder mittels Bilderfassungseinrichtungen, welche beispielsweise an einer Arbeitsmaschine bzw. einem Spritzgestänge angeordnet sind, erfasst und/oder bereitgestellt werden. Die hier gezeigte Nutzfläche N ist für eine landwirtschaftliche Anwendung nach Art einer Unkrautbekämpfung, insbesondere durch Einzelpflanzenbehandlung, mittels einer als Feldspritze ausgebildeten Verteilmaschine 10 vorgesehen. Innerhalb der Nutzfläche N sind eine Vielzahl von Pflanzen P nach Art von Wildbewuchs, insbesondere Unkräutern, zu erkennen. Außerhalb der Nutzfläche N und unmittelbar vor der äußeren Feldgrenze 20 ist weiterhin eine schematisch dargestellte Feldspritze 10 zu erkennen, welche beispielhaft als Anbaugerät ausgeführt und mit einem landwirtschaftlichen Zugfahrzeug Z gekoppelt ist. Je nach Anwendungsart kann die Verteilmaschine 10 alternativ auch als landwirtschaftliches Sä- oder Streugerät und/oder gezogen oder selbstfahrend ausgebildet sein.

Die abgebildete Feldspritze 10 umfasst einen Vorratsbehälter 11 und ein in Fahrtrichtung F gesehen dahinter angeordnetes Spritzgestänge 12. Innerhalb des Vorratsbehälters 11 wird ein Verteilgut bereitgestellt und/oder zurückgehalten, welches für die beispielhaft gezeigte Anwendungsart als Spritzflüssigkeit ausgeführt ist. Die Spritzflüssigkeit ist hierbei als Unkrautbekämpfungsmittel, insbesondere Herbizid, ausgeführt, wobei alternativ für andere Anwendungsarten auch Dünge- und/oder Pflanzenschutzmittel oder dergleichen denkbar sind. Weiterhin ist anstelle der Spritzflüssigkeit auch granulares Verteilgut, beispielsweise Saatgut und/oder Dünger, denkbar. Die Feldspritze 10 umfasst weiterhin ein in den Figuren nicht gezeigtes fluidleitendes Fördersystem, insbesondere mit wenigstens einer Pumpeinrichtung, wenigstens einem Ventil und/oder wenigstens einer Förderleitung, und einer Vielzahl von als Spritzdüsen ausgeführten Verteilorganen. Die in den Figuren ebenfalls nicht gezeigten Verteilorgane, insbesondere Spritzdüsen, sind über das fluidleitende Fördersystem mit dem Vorratsbehälter 11 gekoppelt und unterhalb und/oder entlang des Spritzgestänges 12 gruppenweise in mehrere Teilbreiten unterteilt. Weiterhin sind die Verteilorgane, insbesondere Spritzdüsen, dazu eingereicht, das Verteilgut, insbesondere die Spritzflüssigkeit, bedarfsgerecht auf der Nutzfläche N und/oder den Pflanzen P zu applizieren.

Darüber hinaus ist der Verteilmaschine 10 ein Steuer- und/oder Regelsystem 200 mit wenigstens einer mobilen und/oder zentralen Rechnereinheit, insbesondere in Form eines Bedienterminals, Job-Rechners und/oder eines Personal-Computers oder dergleichen, zugeordnet. Das Steuer- und/oder Regelsystem 200 ist dazu eingereicht, die Verteilmaschine 10, insbesondere die Verteilorgane, und damit die Applikation des Verteilguts während der Überfahrt der Nutzfläche N anhand wenigstens eines bereitgestellten ersten Datensatzes und anhand von satelliten-basierender Positionsinformationen der Verteilmaschine 10 und/oder der Nutzfläche N zu steuern und/oder zu regeln. Hierfür sind dem Steuer- und/oder Regelsystem 200 eine Mehrzahl von Sollwerte-Empfängern, insbesondere Steuergeräte, zugeordnet, welchen wiederrum jeweils einer Mehrzahl von Teilbreiten mit Verteilorganen zugeordnet sind. Die Sollwerte-Empfänger sind dazu eingerichtet, verschiedene Einstellparameter, insbesondere vorgegebene Verteilgutmengen 30, zu empfangen und/oder abzurufen und die jeweils zugeordneten Teilbreiten, insbesondere Verteilorgane, auf der Basis der Einstellparameter, insbesondere Verteilgutmengen 30, zu steuern und/oder zu regeln bzw. einzustellen.

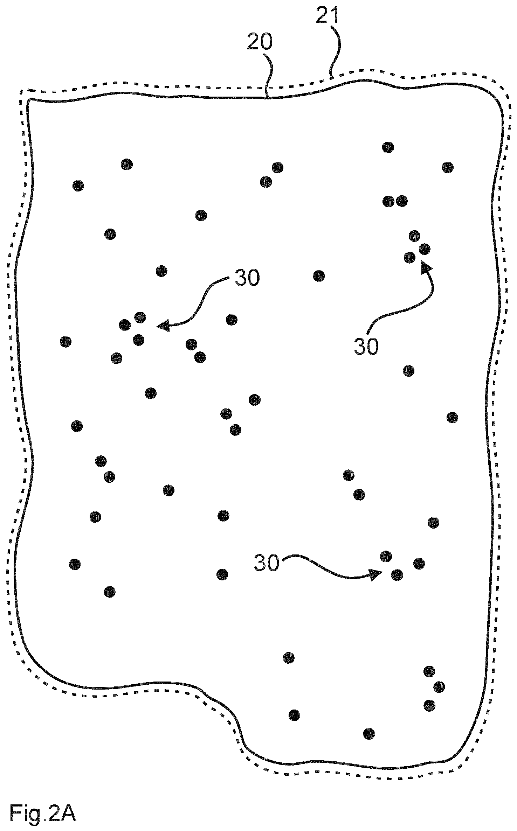

Hierfür wird der elektronische ersten Datensatz, insbesondere die Applikationskarte, wie beispielhaft in der Fig.2A dargestellt, bereitgestellt. Der erste Datensatz, insbesondere die Applikationskarte, basiert dabei auf der zuvor erfassten Nutzfläche N, wie in Fig.1 gezeigt. Auf dem ersten Datensatz, insbesondere der Applikationskarte, sind neben einer elektronischen Abbildung der zu behandelnden und/oder zu bearbeitenden Nutzfläche N bedarfsgerechte Verteilgutmengen 30, insbesondere ortsbasiert und/oder teilflächenspezifisch, hinterlegt. Anstelle der tatsächlichen Pflanzen P sind hierbei auf den entsprechenden Positionen die benötigten Verteilgutmengen 30 des Verteilguts, insbesondere der Spritzflüssigkeit, abgebildet und/oder hinterlegt, auf deren Basis die jeweiligen Sollwerte während der Überfahrt und/oder Applikation für die Verteilorgane mittels des Steuer- und/oder Regelsystems 200 bestimmt werden. Entlang der tatsächlichen Feldgrenze 20 der Nutzfläche N ist symbolhaft eine unterbrochene bzw. gestrichelte Linie zu sehen, welche eine elektronische Feldgrenze 21 darstellt und ebenfalls auf dem ersten elektronischen Datensatz, insbesondere der Applikationskarte, hinterlegt ist. Alternativ dazu kann auch wenigstens ein weiterer elektronischer Datensatz bereitgestellt sein, welcher die elektronische Feldgrenze 21 umfasst. Darüber hinaus kann die elektronische Feldgrenze 21 auch manuell, beispielsweise durch Abfahren der tatsächlichen Feldgrenze 20, vorgegeben werden. Anhand derartiger Feldgrenzen 21 ist das Steuer- und/oder Regelsystem 200, insbesondere mittels Teilbreitenschaltung, dazu eingerichtet, die jeweiligen Teilbreiten, insbesondere Verteilorgane, mittels verteilgutmengenunabhängiger Schaltbefehle anzusteuern und diese dadurch je nach Bedarf zu aktivieren bzw. zu deaktivieren. Aufgrund der einfacheren Verarbeitbarkeit und/oder der geringeren Übertragungsgrößen derartiger verteilgutmengenunabhängiger Schaltbefehle kann somit zumindest nahezu jede Teilbreite, insbesondere jedes Verteilorgan, individuell und zumindest nahezu unabhängig voneinander angesteuert werden.

Alternativ oder zusätzlich zur Feldgrenze 21 kann das Steuer- und/oder Regelsystem 200 anhand der Positionsinformationen und/oder der Konfiguration der Verteilmaschine 10 während der Überfahrt bzw. Applikation bereits mit Verteilgut applizierte Bereiche der Nutzfläche N erfassen und nach dem Wechseln der Fahrgasse und/oder Fahrspur abrufen und/oder berücksichtigen. Das Steuer- und/oder Regelsystem 200 ist dadurch ferner dazu eingerichtet, Teilbreiten, insbesondere Verteilorgane, welche sich innerhalb oder oberhalb bereits applizierter Bereiche befinden zu deaktivieren und damit die Applikation über die entsprechenden Teilbreiten, insbesondere Verteilorgane, zu sperren bzw. zu verhindern.

Die Teilbreiten, insbesondere Verteilorgane, werden während der Applikation vom Steuer- und/oder Regelsystem 200 derart angesteuert, dass eine Applikation bereits applizierter Bereiche und/oder außerhalb der Feldgrenze 21 zumindest nahezu ausgeschlossen ist.

Hierbei sei explizit darauf hingewiesen, dass bisherige landwirtschaftliche Verteilmaschinen 10 in der Regel eine begrenzte Anzahl von Sollwerte-Empfängern, insbesondere Steuergeräten, zum Empfangen von unterschiedlichen Einstellparametern, insbesondere einzustellender Verteilgutmengen, aufweisen. Die Anzahl der Sollwerte-Empfänger, insbesondere der Steuergeräte, wird in der Regel von der Anzahl an eigentlichen Teilbreiten der Verteilmaschine 10 übertroffen. Dem gegenüber kann das Steuer- und/oder Regelsystem 200, insbesondere unabhängig von den Sollwerte-Empfängern, eine höhere Anzahl oder zumindest nahezu jede Teilbreite, insbesondere jedes Verteilorgan, mittels verteilgutmengenunabhängiger Schaltbefehle ansteuern. Somit können die Teilbreiten, insbesondere Verteilorgane, vom Steuer- und/oder Regelsystem 200 mit höherer Präzision zu- und/oder abgeschaltet werden als unterschiedliche Verteilgutmengen über die jeweiligen Sollwerte-Empfänger an den Teilbreiten, insbesondere Verteilorganen, einstellbar sind.

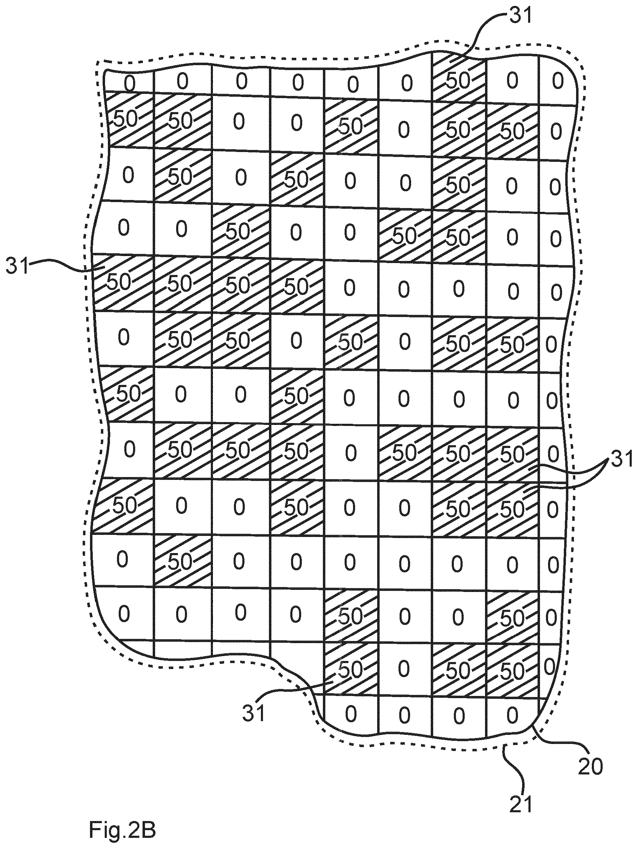

Die Fig.2B zeigt den ersten elektronischen Datensatz in einer alternativen schematischen Darstellung. Die Nutzfläche N und die bedarfsgerechten, insbesondere ortsbasierten und/oder teilflächenspezifischen, Verteilgutmengen 31 sind hierbei in Raster-Form und/oder nach Art von einzelnen Zonen hinterlegt und/oder abrufbar. Innerhalb eines Rasters oder einer Zone ist die benötigte Verteilgutmenge 31 zu sehen, welche hierbei beispielhaft durch eine flächenbezogene Mengenangabe mit "0" oder "50" angegeben und/oder gekennzeichnet ist. Die "0" innerhalb eines Rasters bedeutet, dass innerhalb dieser Teilfläche kein Verteilgut appliziert werden soll, während innerhalb der Raster bzw. Zonen die mit "50" angegeben und/oder gekennzeichnet sind, beispielhaft eine Verteilgutmenge von 50 Liter pro Hektar zu applizieren ist. Alternativ oder zusätzlich hierzu sind auch andere, insbesondere unterschiedliche, Verteilgutmengen und/oder andere, beispielsweise zeitbezogene, Maßeinheiten denkbar.

Folglich werden für die Teilbreiten, insbesondere Verteilorgane, während der Applikation die entsprechenden Verteilgutmengen aus der Applikationskarte, insbesondere aus Fig.2A und/oder 2B, abgerufen und/oder eingestellt. Hierbei sei nochmal explizit darauf hingewiesen, dass es sich bei den in Fig.2A und 2B beispielhaft abgebildeten Applikationskarten, um vereinfachte schematische Darstellungen handelt, welche in der Praxis auch anders abgebildet bzw. dargestellt sein können.

An den jeweiligen Teilbreiten, insbesondere Verteilorganen, werden anhand der Applikationskarte folglich diejenigen Verteilgutmengen 30, 31 vorgegeben und/oder eingestellt, innerhalb und/oder oberhalb derer sich die jeweilige Teilbreite, insbesondere das jeweilige Verteilorgan, in der jeweiligen Situation der Applikation gerade befindet. Da üblicherweise der gesamten Arbeitsbreite der Verteilmaschine 10 oder mehreren Teilbreiten ein gemeinsamer Sollwerte-Empfänger zugeordnet ist, kann es während der Applikation zu Situationen kommen, bei welchem sich die aktuelle Arbeitsbreite der Verteilmaschine 10 oder die Teilbreiten eines gemeinsamen Sollwerte-Empfängers zu einem Zeitpunkt innerhalb oder oberhalb unterschiedlich vorgegebener Verteilgutmengen 30, 31 befinden. Beispielsweise kann sich wenigstens eine erste Teilbreite, insbesondere ein erstes Verteilorgan, während der Applikation oberhalb einer Pflanze P befinden, während wenigstens eine zweite Teilbreite, insbesondere ein zweites Verteilorgan, in horizontaler Richtung beabstandet zur Pflanze P ist und somit kein Bedarf von zu applizierendem Verteilgut über die zweite Teilbreite, insbesondere das zweite Verteilorgan, besteht. Aufgrund des gemeinsamen Sollwerte-Empfängers der Teilbreiten, insbesondere Verteilorgane, wird trotz unterschiedlich vorgegebener Verteilgutmengen nur einer der unterschiedlichen Verteilgutmengen 30, 31 an den entsprechenden Teilbreiten, insbesondere Verteilorganen, eingestellt.

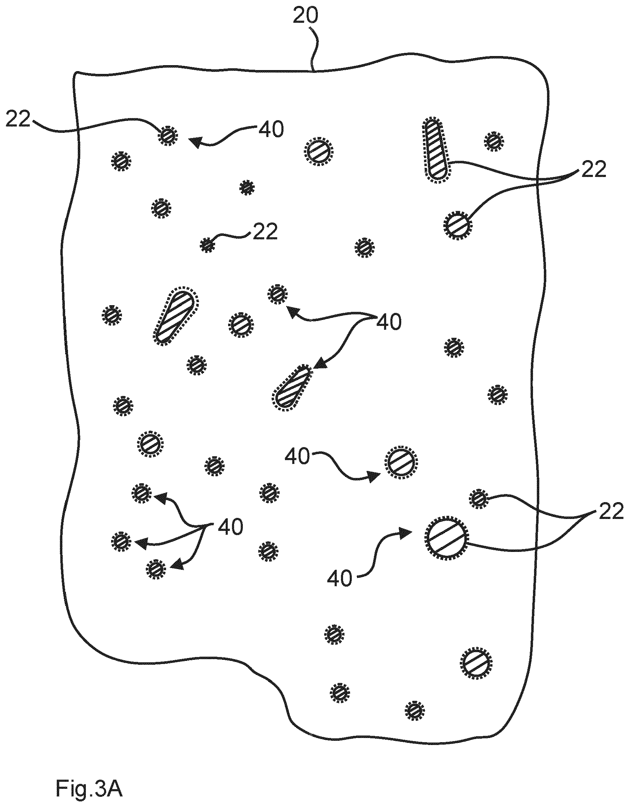

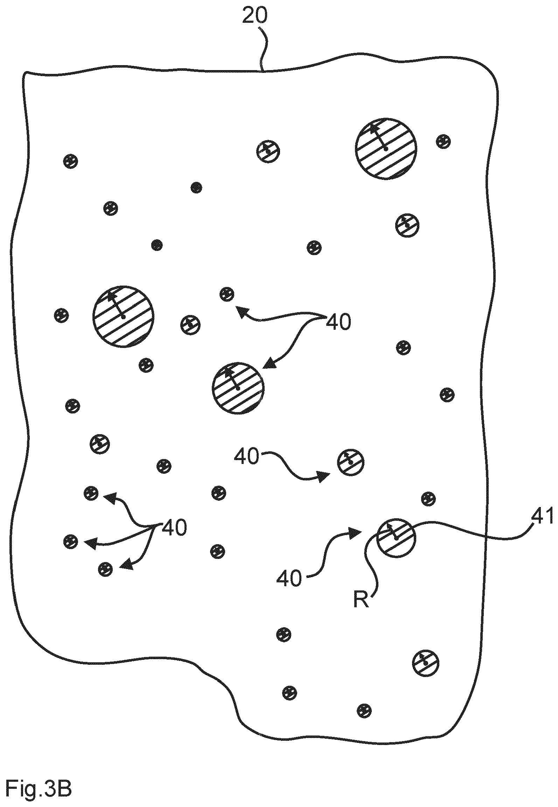

Um zu erreichen und/oder sicherzustellen, dass das Verteilgut zumindest nahezu ausschließlich nur in und/oder auf den Bereichen der Nutzfläche N, insbesondere Pflanzen P, appliziert wird, an denen auch tatsächlich der Bedarf an Verteilgut besteht, wird der erste Datensatz, insbesondere die Applikationskarte, erfindungsgemäß zu wenigstens einem elektronischen zweiten Datensatz, wie beispielhaft in den Figuren 3A und 3B gezeigt, umgewandelt. Alternativ oder zusätzlich dazu wird der wenigstens eine zweite Datensatz erfindungsgemäß auf der Basis des ersten Datensatzes, insbesondere der Applikationskarte, generiert. Der zweite Datensatz umfasst oder bildet dabei alternativ oder zusätzlich zu den bedarfsgerechten, insbesondere ortsbasierten und/oder teilflächenspezifischen, Verteilgutmengen, eine Vielzahl separat, insbesondere abgegrenzter und, zu applizierender Applikationsbereiche 40. Derartige Applikationsbereiche 40 entsprechen dabei den Bereichen entlang der Nutzfläche, an denen eine Applikation von Verteilgut, insbesondere Spritzflüssigkeit, auch tatsächlich vorgesehen ist. Bereiche und/oder Teilflächen, an denen kein Verteilgut vorgesehen ist bzw. für die keine bestimmte Verteilgutmenge 30, 31 hinterlegt ist, werden von derartigen Applikationsbereichen 40 nicht umfasst.

Durch Umwandeln des ersten Datensatzes und/oder durch das Generieren des zweiten Datensatzes werden die Applikationsbereiche 40 jeweils um zumindest einen ortsbasierten Punkt 41 oder zumindest eine Teilfläche, auf dem oder innerhalb der auf dem ersten Datensatz, insbesondere der Applikationskarte, eine Verteilgutmenge 30, 31 einen definierten Grenzwert überschreitet, insbesondere größer Null ist, gebildet und/oder simuliert. Mit anderen Worten werden derartige Applikationsbereiche 40 jeweils auf wenigstens eine auf dem ersten Datensatz, insbesondere der Applikationskarte, hinterlegte Einzelpflanze P oder einer Mehrzahl, insbesondere nah, benachbarter Einzelpflanzen P projiziert und/oder generiert.

Für das Abbilden und/oder Simulieren der Applikationsbereiche 40 sind unterschiedliche Varianten denkbar.

Die Fig.3A zeigt ein erstes Ausführungsbeispiel des erfindungsgemäßen zweiten Datensatzes, welcher hierbei nach Art einer invertierten Feldgrenzenkarte abgebildet ist und/oder simuliert wird. Die zum Ausführen der Teilbreitenschaltung bzw. zum mengenunabhängigen Schalten der Teilbreiten, insbesondere Verteilorgane, erforderliche elektronische äußere Feldgrenze 21 wird hierbei ignoriert und/oder entfernt. Stattdessen werden die Applikationsbereiche 40 hierbei jeweils von einer internen Feldgrenze 22 umschlossen, so dass eine Art invertierte Felgrenzenkarte simuliert und/oder generiert wird. Das Steuer- und/oder Regelsystem ist dabei dazu eingerichtet, derartige interne Feldgrenzen 22 nach Art und/oder ähnlich der äußeren Feldgrenze 21 zu verarbeiten und/oder zu berücksichtigen.

In der Fig.3B ist ein zweites Ausführungsbeispiel des erfindungsgemäßen zweiten Datensatzes gezeigt, welcher hierbei nach Art einer georeferenzierten Punktekarte abgebildet ist und/oder simuliert wird. Die Applikationsbereiche 40 werden dabei insbesondere durch zumindest einen Punkt 41, insbesondere eine georeferenzierte Koordinate, und wenigstens einer Größen- und/oder Ausdehnungsangabe, insbesondere einem Radius R, gebildet. Alternativ dazu können derartige Applikationsbereich 40 auch durch andere Geometrien, beispielsweise durch eckige oder polygonförmige Formen, gebildet und/oder simuliert werden.

Hierbei sei explizit darauf hingewiesen, dass derartige Ausführungsbeispiele nicht ausschließlich wie gezeigt bildlich zu verstehen sind. Vielmehr können derartige Applikationsbereiche 40 in elektronischen Form, insbesondere textbasiert und/oder tabellarisch, hinterlegt sein. Insbesondere ist vorgesehen, dass bei tabellarisch hinterlegten Applikationsbereichen 40 jedem georeferenzierten Punkt 41 ein Radius R zugeordnet ist. Alternativ oder zusätzlich kann jedem georeferenzierten Punkt 41 auch eine bestimmte Verteilgutmenge 30, 31 zugeordnet sein.

Die nachfolgend näher beschriebene Funktionsweise des Verfahrens gilt sowohl für das Ausführungsbeispiel in Fig.3A als auch in Fig.3B.

Sobald der zweite Datensatz aus dem ersten Datensatz umgewandelt oder alternativ bzw. zusätzlich generiert wird, wird er auf dem zugeordneten Steuer- und/oder Regelsystem 200, insbesondere einem mobilen Bedien- und/oder Anzeigemittel der Verteilmaschine 10, abgerufen.

Des Weiteren werden anhand des zweiten Datensatzes die verteilgutmengenunabhängigen Schaltbefehle für die Verteilmaschine 10, insbesondere zum Aktivieren und/oder Deaktivieren der Teilbreiten, insbesondere der Verteilorgane, generiert, so dass die Verteilmaschine 10, insbesondere wenigstens ein an der Verteilmaschine 10 angeordnetes Verteilorgan, mittels des Steuer- und/oder Regelsystems 200 anhand des zweiten Datensatzes, insbesondere der Applikationsbereiche 40 und/oder der verteilgutmengenunabhängigen Schaltbefehle, während der Applikation gesteuert und/oder geregelt werden kann.

Das Steuer- und/oder Regelsystem 200 ist somit insbesondere dazu eingerichtet, die Teilbreiten und/oder Verteilorgane während der Applikation derart anzusteuern, dass das Verteilgut von der Verteilmaschine 10 zumindest nahezu ausschließlich innerhalb der Applikationsbereiche 40 und/oder im Nahbereich der Applikationsbereiche 40 appliziert wird. Teilbreiten, insbesondere Verteilorgane, die sich während der Applikation außerhalb der in Fig.3 gezeigten Applikationsbereiche 40 befinden, werden vom Steuer- und/oder Regelsystem 200, insbesondere unabhängig vom jeweiligen Sollwerte-Empfänger vorgegebener Verteilgutmengen 30, 31, deaktiviert. Anders herum wird das Verteilgut nur über diejenige oder diejenigen Teilbreiten freigegeben, dessen Verteilorgan oder dessen Verteilorgane sich während dem Applizieren innerhalb und/oder oberhalb der Applikationsbereiche 40 befinden.

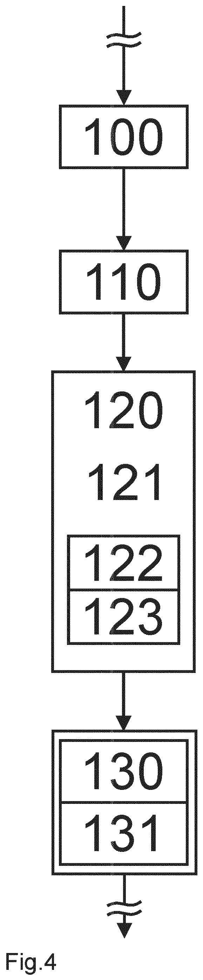

Die Fig.4 zeigt ein erfindungsgemäßes schematisches Ablaufdiagramm eines Verfahrens zum Steuern und/oder Regeln einer landwirtschaftlichen Verteilmaschine 10, insbesondere Feldspritze, welche dazu eingerichtet ist, Verteilgut auf einer landwirtschaftlichen Nutzfläche N zu applizieren.

Das erfindungsgemäße Verfahren wird eingeleitet durch den Schritt:
100) Bereitstellen wenigstens eines elektronischen ersten Datensatzes, insbesondere einer Applikationskarte, in welchem die zu behandelnde und/oder zu bearbeitende Nutzfläche N und bedarfsgerechte Verteilgutmengen 30, 31, insbesondere ortsbasiert und/oder teilflächenspezifisch, hinterlegt sind.

Daraufhin wird der nachfolgende Schritt ausgeführt:
110) Einlesen und/oder Abrufen des ersten Datensatzes, insbesondere der Applikationskarte, auf einer mobilen und/oder zentralen Rechnereinheit.

Nachdem der erste elektronische Datensatz, insbesondere die Applikationskarte, eingelesen und/oder abgerufen ist, wird einer der nachfolgenden Schritte ausgeführt:
120) Umwandeln des erstens Datensatzes, insbesondere der Applikationskarte, zu wenigstens einem elektronisch zweiten Datensatz; oder
121) Generieren des wenigstens einen zweiten Datensatzes auf der Basis des ersten Datensatzes, insbesondere der Applikationskarte.

Das Umwandeln des ersten Datensatzes, insbesondere der Applikationskarte, oder das Generieren des zweitens Datensatzes kann alternativ oder zusätzlich durch zumindest einen der nachfolgenden ergänzt oder ersetzt werden:
122) Generieren und/oder Simulieren eines Applikationsbereichs 40, insbesondere von mehreren Applikationsbereichen 40, um zumindest einen ortsbasierten Punkt 41 oder zumindest eine Teilfläche, auf dem oder innerhalb der auf dem ersten Datensatz, insbesondere der Applikationskarte, eine Verteilgutmenge 30, 31 einen definierten Grenzwert überschreitet, insbesondere größer Null ist; und/oder
123) Generieren von verteilgutmengenunabhängigen Schaltbefehlen für die Verteilmaschine 10, welche auf dem zweiten Datensatz, insbesondere den Applikationsbereichen 40, basieren.

Nachdem der zweite Datensatz und/oder die verteilgutmengenunabhängigen Schaltbefehle generiert wurden und/oder bereitgestellt werden, kann alternativ oder zusätzlich zumindest einer der nachfolgenden Schritte ausgeführt werden:
130) Abrufen des zweiten Datensatzes auf einem der Verteilmaschine 10 zugeordneten Steuer- und/oder Regelsystem 200, insbesondere einem mobilen Bedien- und/oder Anzeigemittel; und/oder
131) Steuern und/oder Regeln der Verteilmaschine 10, insbesondere wenigstens eines an der Verteilmaschine 10 angeordneten Verteilorgans, mittels des Steuer- und/oder Regelsystems 200 anhand des zweiten Datensatzes, insbesondere der Applikationsbereiche 40 und/oder der verteilgutmengenunabhängigen Schaltbefehle.

### Bezugszeichenliste

- 10: Landwirtschaftliche Verteilmaschine, Feldspritze
- 11: Vorratsbehälter
- 12: Spritzgestänge
- 20: Tatsächliche Feldgrenze
- 21: Elektronische äußere Feldgrenze
- 22: Interne Feldgrenze
- 30: Verteilgutmenge punktaufgelöst
- 31: Verteilgutmenge teilflächenaufgelöst
- 40: Applikationsbereich
- 41: Punkt, Mittelpunkt des Applikationsbereichs

- 200: Steuer- und/oder Regelsystem

- F: Fahrtrichtung
- N: Landwirtschaftliche Nutzfläche
- P: Pflanze
- R: Radius des Applikationsbereichs
- Z: Zugfahrzeug

## Patentansprüche

1. Verfahren zum Steuern und/oder Regeln einer landwirtschaftlichen Verteilmaschine (10), insbesondere Feldspritze, welche dazu eingerichtet ist, Verteilgut auf einer landwirtschaftlichen Nutzfläche (N) zu applizieren, mit den Schritten:
- Bereitstellen wenigstens einer Applikationskarte, in welcher die zu behandelnde und/oder zu bearbeitende Nutzfläche (N) und bedarfsgerechte Verteilgutmengen (30, 31)ortsbasiert und/oder teilflächenspezifisch hinterlegt sind; und
- Einlesen und/oder Abrufen der Applikationskarte auf einer mobilen und/oder zentralen Rechnereinheit;
**gekennzeichnet durch** den Schritt:
- Umwandeln der Applikationskarte zu wenigstens einem elektronischen zweiten Datensatz; oder
- Generieren des wenigstens einen zweiten Datensatzes auf der Basis der Applikationskarte;
wobei der zweite Datensatz alternativ oder zusätzlich zu den bedarfsgerechten Verteilgutmengen (30, 31) eine Vielzahl separat, vorzugsweise abgegrenzter und, zu applizierender Applikationsbereiche (40) umfasst und/oder abbildet, und wobei das Verteilgut von der Verteilmaschine (10) vorzugsweise zumindest nahezu ausschließlich innerhalb der Applikationsbereiche (40) und/oder im Nahbereich der Applikationsbereiche (40) appliziert wird.

2. Verfahren nach Anspruch 1, **dadurch gekennzeichnet, dass** beim Umwandeln des ersten Datensatzes oder beim Generieren des zweiten Datensatzes zumindest einer der nachfolgenden Schritte ausgeführt wird:
- Generieren und/oder Simulieren eines Applikationsbereichs (40), insbesondere von mehreren Applikationsbereichen (40), um zumindest einen ortsbasierten Punkt (41) oder zumindest eine Teilfläche, auf dem oder innerhalb der auf dem ersten Datensatz, insbesondere der Applikationskarte, eine Verteilgutmenge (30, 31) einen definierten Grenzwert überschreitet, insbesondere größer Null ist; und/oder
- Generieren von verteilgutmengenunabhängigen Schaltbefehlen für die Verteilmaschine (10), welche auf dem zweiten Datensatz, insbesondere den Applikationsbereichen (40), basieren.

3. Verfahren nach Anspruch 2, **dadurch gekennzeichnet, dass** die Applikationsbereiche (40) jeweils aus oder durch wenigstens einen Punkt (41), insbesondere eine georeferenzierte Koordinate, und wenigstens einer Größen- und/oder Ausdehnungsangabe, insbesondere einem Radius (R), gebildet werden.

4. Verfahren nach zumindest einem der vorgenannten Ansprüche, **dadurch gekennzeichnet, dass** die Applikationsbereiche (40) jeweils auf wenigstens eine auf dem ersten Datensatz, insbesondere der Applikationskarte, hinterlegte Einzelpflanze oder einer Mehrzahl benachbarter Einzelpflanzen projiziert und/oder generiert werden.

5. Verfahren nach zumindest einem der vorgenannten Ansprüche,
**gekennzeichnet durch** zumindest einen der nachfolgenden Schritte:
- Abrufen des zweiten Datensatzes auf einem der Verteilmaschine (10) zugeordneten Steuer- und/oder Regelsystem (200), insbesondere einem mobilen Bedien- und/oder Anzeigemittel; und/oder
- Steuern und/oder Regeln der Verteilmaschine (10), insbesondere wenigstens eines an der Verteilmaschine (10) angeordneten Verteilorgans, mittels des Steuer- und/oder Regelsystems (200) anhand des zweiten Datensatzes, insbesondere der Applikationsbereiche (40) und/oder der verteilgutmengenunabhängigen Schaltbefehle.

6. Verfahren nach Anspruch 5, **dadurch gekennzeichnet, dass** die Verteilmaschine (10) eine Vielzahl von Verteilorganen umfasst, welche jeweils gruppenweise einer von mehreren Teilbreiten der Verteilmaschine (10) zugeordnet sind, wobei das Verteilgut über diejenige oder diejenigen Teilbreiten freigegeben wird, dessen Verteilorgan oder dessen Verteilorgane sich während dem Applizieren innerhalb und/oder oberhalb der Applikationsbereiche (40) befinden.

7. Verfahren nach zumindest einem der vorgenannten Ansprüche, **dadurch gekennzeichnet, dass** die Verteilmaschine (10) als eine landwirtschaftliche Feldspritze ausgebildet ist.

## Claims

1. Method for open-loop and/or closed-loop control of an agricultural distribution machine (10), in particular a field sprayer, which is designed to apply distribution material to an agricultural area (N), comprising the steps of:
- providing at least one application map in which the area (N) to be treated and/or worked and required distribution material quantities (30, 31) are stored in a location-based and/or partial-area-specific manner; and
- reading and/or retrieving the application map on a mobile and/or central computer unit;
**characterized by** the step of:
- converting the application map into at least one electronic second data set; or
- generating at least one second data set on the basis of the application map;
the second data set comprising and/or depicting, alternatively or in addition to the required distribution material quantities (30, 31), a plurality of separate, preferably delimited application regions (40) in which application is to take place, and the distribution material being applied by the distribution machine (10) preferably at least almost exclusively within the application regions (40) and/or in the vicinity of the application regions (40).

2. Method according to claim 1, **characterized in that,** when converting the first data set or when generating the second data set, at least one of the following steps is carried out:
- generating and/or simulating an application region (40), in particular a plurality of application regions (40), around at least one location-based point (41) or at least one partial area, at or within which, in the first data set, in particular the application map, a distribution material quantity (30, 31) exceeds a defined limit value, in particular is greater than zero; and/or
- generating switching commands for the distribution machine (10) which are independent of the distribution material quantity and are based on the second data set, in particular the application regions (40).

3. Method according to claim 2, **characterized in that** the application regions (40) are each formed from or by at least one point (41), in particular a georeferenced coordinate, and at least one size and/or extent specification, in particular a radius (R).

4. Method according to at least one of the preceding claims,
**characterized in that** the application regions (40) are each projected and/or generated on at least one individual plant stored in the first data set, in particular the application map, or on a plurality of adjacent individual plants.

5. Method according to at least one of the preceding claims,
**characterized by** at least one of the following steps:
- retrieving the second data set on an open-loop and/or closed-loop control system (200) associated with the distribution machine (10), in particular a mobile operating and/or display means; and/or
- controlling the distribution machine (10), in particular at least one distribution element arranged on the distribution machine (10), in an open-loop and/or closed-loop manner by means of the open-loop and/or closed-loop control system (200) on the basis of the second data set, in particular on the basis of the application regions (40) and/or the switching commands independent of the distribution material quantity.

6. Method according to claim 5, **characterized in that** the distribution machine (10) comprises a plurality of distribution elements which are each assigned in groups to one of a plurality of partial widths of the distribution machine (10), the distribution material being released via the partial width or partial widths whose distribution element or distribution elements are located within and/or above the application regions (40) during application.

7. Method according to at least one of the preceding claims, **characterized in that** the distribution machine (10) is designed as an agricultural field sprayer.

## Revendications

1. Procédé permettant la commande et/ou la régulation d'une machine de distribution (10) agricole, en particulier un pulvérisateur, laquelle machine de distribution est conçue pour appliquer un produit à distribuer sur une surface utile (N) agricole, comportant les étapes consistant à :
- fournir au moins une carte d'application, dans laquelle la surface utile (N) à traiter et/ou à travailler et des quantités de produit à distribuer (30, 31) adaptées aux besoins sont enregistrées en fonction de l'emplacement et/ou de manière spécifique à la surface partielle ; et
- lire et/ou récupérer la carte d'application sur une unité informatique mobile et/ou centrale ;
**caractérisé par** l'étape consistant à :
- convertir la carte d'application en au moins un second ensemble de données électroniques ; ou à
- générer l'au moins un second ensemble de données sur la base de la carte d'application ;
dans lequel le second ensemble de données comprend et/ou représente, en alternative ou en plus des quantités de produit à distribuer (30, 31) adaptées aux besoins, une pluralité de zones d'application (40) séparées, de préférence délimitées et à appliquer, et dans lequel le produit à distribuer est appliqué par la machine de distribution (10) de préférence au moins presque exclusivement à l'intérieur des zones d'application (40) et/ou dans la zone proche des zones d'application (40).

2. Procédé selon la revendication 1, **caractérisé en ce que,** lors de la conversion du premier ensemble de données ou de la génération du second ensemble de données, au moins l'une des étapes suivantes est effectuée :
- génération et/ou simulation d'une zone d'application (40), en particulier de plusieurs zones d'application (40), autour d'au moins un point (41) basé sur un emplacement ou d'au moins une surface partielle sur laquelle ou à l'intérieur de laquelle, sur le premier ensemble de données, en particulier la carte d'application, une quantité de produit à distribuer (30, 31) dépasse une valeur limite définie, en particulier est supérieure à zéro ; et/ou
- génération d'instructions de commutation indépendantes de la quantité de produit à distribuer pour la machine de distribution (10), lesquelles instructions de commutation sont basées sur le second ensemble de données, en particulier sur les zones d'application (40).

3. Procédé selon la revendication 2, **caractérisé en ce que** les zones d'application (40) sont formées respectivement à partir d'au moins ou par au moins un point (41), en particulier une coordonnée géoréférencée, et d'au moins une indication de taille et/ou d'étendue, en particulier un rayon (R).

4. Procédé selon au moins l'une des revendications précédentes, **caractérisé en ce que** les zones d'application (40) sont respectivement projetées et/ou générées sur au moins une plante individuelle ou une pluralité de plantes individuelles voisines enregistrées sur le premier ensemble de données, en particulier sur la carte d'application.

5. Procédé selon au moins l'une des revendications précédentes, **caractérisé par** au moins l'une des étapes suivantes :
- récupération du second ensemble de données sur un système de commande et/ou de régulation (200) associé à la machine de distribution (10), en particulier sur un moyen d'actionnement et/ou d'affichage mobile ; et/ou
- commande et/ou régulation de la machine de distribution (10), en particulier d'au moins un organe de distribution disposé sur la machine de distribution (10), à l'aide du système de commande et/ou de régulation (200) au moyen du second ensemble de données, en particulier des zones d'application (40) et/ou des instructions de commutation indépendantes de la quantité de produit distribué.

6. Procédé selon la revendication 5, **caractérisé en ce que** la machine de distribution (10) comprend une pluralité d'organes de distribution qui sont associés respectivement par groupes à l'une de plusieurs sections de la machine de distribution (10), dans lequel le produit à distribuer est libéré sur la ou les sections dont l'organe de distribution ou les organes de distribution se trouvent à l'intérieur et/ou au-dessus des zones d'application (40) pendant l'application.

7. Procédé selon au moins l'une des revendications précédentes, **caractérisé en ce que** la machine de distribution (10) est conçue comme un pulvérisateur agricole.
